# EUROPÄISCHE PATENTSCHRIFT

(11) **EP 2 961 581 B1**
(45) Veröffentlichungstag und Bekanntmachung des Hinweises auf die Patenterteilung: **22.04.2020**
(21) Anmeldenummer: 14717982.4
(22) Anmeldetag: 18.02.2014
(51) Int. Cl.: B28B 7/34, B28B 7/36, B29C 33/52, B29C 33/56, B29C 67/00

(54) **VERFAHREN ZUM HERSTELLEN EINES FORMTEILS MIT EINER WASSERLÖSLICHEN GUSSFORM SOWIE MATERIALSYSTEM ZU DEREN HERSTELLUNG**
PROCESS FOR PRODUCING A MOULDING USING A WATER-SOLUBLE CASTING MOULD AND MATERIAL SYSTEM FOR THE PRODUCTION THEREOF
PROCÉDÉ DE PRODUCTION D'UNE PIÈCE MOULÉE AU MOYEN D'UN MOULE HYDROSOLUBLE ET SYSTÈME DE MATÉRIAUX POUR LA PRODUCTION DE CE DERNIER

(30) Priorität: 28.02.2013 DE 102013003303
(43) Veröffentlichungstag der Anmeldung: 06.01.2016
(73) Patentinhaber: voxeljet AG, 86316 Friedberg (DE); Fluidsolids AG, 8004 Zürich (CH)
(72) Erfinder: GÜNTHER, Daniel, 81371 München (DE); GNÜCHTEL, Ingo, 86504 Merching (DE); KARRER, Beat, CH-8005 Zürich (CH)
(74) Vertreter: Helbig, Christian
(86) Internationale Anmeldenummer: PCT/DE2014/000063
(87) Internationale Veröffentlichungsnummer: WO 2014/131388

(56) Entgegenhaltungen:
- EP-A1- 1 974 838
- FR-A- 515 824
- JP-A- 2004 082 206
- JP-A- 2009 202 451
- US-A- 5 089 186

## Beschreibung

### Technisches Gebiet

Die Erfindung betrifft ein Verfahren zur Herstellung eines Formteils mit einer wasserlöslichen Gussform sowie die Verwendung eines Materialsystems zu deren Herstellung.

### Stand der Technik

Kunststoffteile, welche mit bekannten Spritzgussverfahren hergestellt werden, zeichnen sich durch hohe Festigkeiten sowie Oberflächengüten und geringen Produktionskosten aus. Gleiches gilt für Bauteile aus gegossenem Beton, Gips oder aus anderen aushärtenden Werkstoffen. Allerdings ist die Herstellung von entsprechenden Gussformen relativ teuer, da diese ein hohes Mass an Präzision erfordert.

Verfahren zum schichtweisen Aufbau von Objekten, beispielsweise 3D Druckverfahren wie Rapid Prototyping, ermöglichen eine schnelle und kostengünstige Herstellung von Objekten mit einer guten Präzision. Daher wäre es wünschenswert, derartige Verfahren zur Herstellung von Gussformen für aushärtende Werkstoffe zu verwenden. Jedoch wirkt sich die Porosität der mittels eines Schichtbauverfahrens hergestellten Gussform negativ auf die Oberflächengüte sowie auf das Abbinde- und Formfüllungsverhalten von aushärtenden Werkstoffen aus.

Auch stellt das Entformen eines Abgusses ein bislang unbefriedigend gelöstes Problem dar.

DE 691 25 064 T2 beschreibt ein Verfahren zum Formglessen eines Produkts mit komplexen Formen, wie Hinterschneidungen oder Hohlraumkonfigurationen. Bei diesem Verfahren werden wasserlösliche Glessformkerne aus einem Teilchenmaterial sowie einem wasserlöslichen Kohlenhydrat hergestellt, die nach dem Abguss mit Wasser aufgelöst werden können. Die giessbaren Materialien dringen dabei aber nicht in die Form ein, da diese an der Grenzfläche nicht porös ist.

DE 195 25 307 A1 offenbart einen Giesskern, der aus einem mittels eines Bindemittels verfestigten Trockenstoff hergestellt Ist. Der Glesskern wird nach Erstellen eines Abgusses mittels Wasser aufgelöst und ausgewaschen. Der Giesskern ist dabei aus Trockensand oder Perllte sowie aus Natriumhydrogenphosphat als wasserlösliches Bindemittel hergestellt.

DE 10 2005 019 699 B3 beschreibt ein Verfahren zur Herstellung eines dreidimensionalen Gegenstandes aus Metallsalz-Partikeln als Gussform oder Gusskern. Hierzu wird der dreidimensionale Gegenstand in einem Schichtaufbauverfahren aus Partikeln, die aus ein- oder mehrwertigen, wasser- und/oder alkohollöslichen Metallsalzen bestehen verwendet.

JP 2004 082206 A offenbart ein Verfahren zur Herstellung von Formteilen mittels 3D-Druckverfahren zur Herstellung von wasserlöslichen Gussformen.

Keines der zitierten Dokumente des Standes der Technik offenbart die vorliegende Erfindung oder legt sie nahe.

Ein wesentlicher Nachteil bei der Verwendung von mit einem pulverbettbasierten Schichtaufbauverfahren hergestellten Gussformen ist deren Porosität, welche sich aus der Verwendung eines Pulvermaterials ergibt. Diese Porosität steht der Fertigung von exakten und formgenauen Abgüssen aus hydraulisch abbindenden Werkstoffen entgegen.

Ein Nachteil von bekannten Verfahren ist ausserdem die für den Gussprozess nötigen Formen einfach und vollständig von dem herzustellenden Formtell trennen zu können. Zudem sind saugfähige Komponenten nach dem Stand der Technik nicht geeignet, um hydraulisch gebundene Gusswerkstoffe zu verarbeiten.

### Darstellung der Erfindung

Aufgabe der Erfindung ist es, ein dem eingangs genannten technischen Gebiet zugehörendes Verfahren zu schaffen, welches die Herstellung eines Formtells mit einer mittels Schichtbauverfahren hergestellten Gussform ermöglicht, wobei ein exakter und formgenauer Abguss sowie ein einfaches Entformen des Formteils ermöglicht werden, oder zumindest die Nachteile des Standes der Technik zu vermindern oder ganz zu vermeiden.

Die Lösung der Aufgabe ist durch die Merkmale des Anspruchs 1 und 7 definiert. Die Erfindung betrifft in einem Aspekt Ein Verfahren zur Herstellung von Formteilen (16) mittels 30-Druckverfahren zur Herstellung von Gussformen, umfassend die Schritte:
a) Herstellung einer wasserlöslichen Gussform (6), die Poren (8) aufweist, mit einem pulverbettbasierten Schichtbauverfahren;
b) Versiegeln der Oberfläche der Gussform (6) mit einem Material (9; 10), wobei das Material (9; 10) zum Versiegeln der Oberfläche der Gussform (6) wasserunlöslich ist;
c) Erstellen eines Abgusses des Formteils (16) durch Befüllen der Gussform (6) mit einem fliessfähigen, aushärtbaren Werkstoff (13);
d) Auflösen der Gussform (6) mit einer wässrigen Lösung (18), mittels einer temperierten wässrigen Losung (18), nachdem der Abguss verfestigt Ist, wobei die wässrige Lösung eine höhere Temperatur als die Raumtemperatur von 20 °C aufweist und wobei das zum Versiegeln verwendete, wasserunlösliche Material gleichzeitig vom Abguss abgewaschen werden kann, wobei die Temperatur der Lösung (18) oberhalb der Schmelztemperatur der verwendeten wasserunlöslichen Materials liegt.

In einem weiteren Verfahren betrifft die Erfindung die Verwendung eines Materialsystems zur Herstellung von wasserlöslichen Gussformen (16) in einem wie oben genannten Verfahren, umfassend:
a) mindestens ein wasserlösliches Material zum Aufbau einer Gussform (6) in einem Schichtbauverfahren, welches mindestens ein Partikelmaterial (7) sowie wenigstens ein wasserlösliches Bindemittel umfasst; und
b) mindestens ein Material (9; 10) zum Versiegeln der Oberfläche der Gussform (6), wobei das Material (9, 10) zum Versiegeln der Gussform (6) Wachs, mindestens eine Fettsäure, mindestens ein wasserunlösliches Polymer, Stearylalkohol und/oder Cetylalkohol oder eine Mischung davon umfasst.

Insbesondere bevorzugt wird die Gussform mit einem pulverbettbasierten Schichtbauverfahren hergestellt. In einem zweiten Schritt wird die Oberfläche der Gussform mit einem wasserunlöslichen Material versiegelt. Danach wird ein Abguss des Formteils durch Befüllen der Gussform mit einem fliessfähigen, aushärtenden Werkstoff erstellt. Nach dem Verfestigen des Abgusses wird die Gussform mit einer wässrigen Lösung, die insbesondere temperiert sein kann, aufgelöst.

Durch das Versiegeln mit dem wasserunlöslichen Material können Poren, die in der Gussform vorhanden sind, verschlossen werden sowie eine allfällige Oberflächenrauheit der Gussform ausgeglichen werden. Dadurch lässt sich selbst bei in einem pulverbettbasierten Schichtbauverfahren hergestellten Gussformen eine glatte Oberfläche herstellen, welche einen formgenauen und exakten Abguss ermöglicht. Da die Gussform aus einem wasserlöslichen Material besteht, lässt sich diese einfach und schnell vom verfestigten Formteil mithilfe einer wässrigen Lösung entfernen, wobei das zur Versiegelung verwendete, wasserunlösliche Material gleichzeitig vom Formteil abgewaschen werden kann. Überraschend wurde zudem festgestellt, dass durch die Versiegelung keine signifikante Penetration des fliessfähigen, aushärtenden Werkstoffs in die Oberfläche der Gussform erfolgt.

Die Erfindung stellt somit vorteilhafter Weise komplexe Gussformen bereit, die mittels 3D Druck leicht, schnell und kostengünstig herstellbar sind. Des weiteren können mit den erfindungsgemäß hergestellten Gussformen nicht nur komplexe Gussformen hergestellt werden, sondern aufgrund der Art und Weise wie die Gussform nach dem Abguss entfernt werden kann, ist es möglich auch Hinterschneidungen In den Abgüssen zu realisieren.

Dabei war es überraschend, dass der Auswaschschritt so einfach durchzuführen Ist und die Gussform vollständig entfernt werden kann. Das Bauteil kann somit durch das erfindungsgemäße Verfahren schnell und vollständig in einem kostengünstigen Arbeitsschritt mit geringem Material-, Energie- und Zeitaufwand entfernt werden.

Weiterhin überraschen war, dass die Versiegelung in einfacher Weise herstellbar war und dabei sehr gute Abgussergebnisse erzielt werden konnten. Man hätte eher erwartet, dass es zu einer signifikanten Penetration des Gussmaterials in die Versiegelung und die Gussform kommt und mit den dadurch zu erwartenden Abgussungenauigkelten. Mit den bei dem erfindungsgemäßen Verfahren verwendeten Verfahrensschritten und der gewählten Versiegelung war dies aber nicht der Fall und sehr gute Abgussqualitaten können erzielt werden. Es können also überraschender Welse gute Oberflächen In einem breiten Prozessfenster erzielt werden.

Mit dem erfindungsgemäßen Verfahren und der besonderen Materialkombination wird es also erst möglich die im 3D Druck entstehende Porosität und für einen Abguss negative und unerwünschte Ungenauigkeiten zu vermeiden. Unerwarteter Welse können mit dem erfindungsgemäßen Verfahren sehr hohe Oberflächengüten erzielt werden, die eine hohe Genauigkeit bei dem Abgussschritt ermöglichen.

Als "wasserlösliches Material" im Sinne dieser Anmeldung wird ein Material verstanden, welches sich bei Vorliegen eines Überschusses an Wasser oder einer wässrigen Lösung vollständig darin auflöst. Als Überschuss wird dabei verstanden, dass das Volumen des Wassers oder der wässrigen Lösung mindestens gleich gross oder grösser ist, als das Volumen des aufzulösenden Materials. Insbesondere beträgt die Löslichkeit des wasserlöslichen Materials über 1 g pro Liter.

Die Gussform weist zumindest einen Negativabdruck der Aussenform des herzustellenden Formtells auf. Bevorzugt weist die mit dem Schichtbauverfahren hergestellte Gussform zudem einen Kern auf, welcher eine Innenform bez. einen Hohlraum innerhalb des herzustellenden Formteils ausbildet. Insbesondere bevorzugt weist die erfindungsgemässe Gussform komplexe geometrische Formen auf, wie z.B. Hinterschnitte.

Als Schichtbauverfahren können an sich alle im Stand der Technik bekannten Schichtbauverfahren eingesetzt werden, wie z.B. das Schmeizschichtungsverfahren (fused deposition modelling). Bei diesem Verfahren wird das wasserlösliche Material schichtweise über eine Im Raum bewegliche Extruderdüse aufgetragen. Besonders bevorzugt wird Jedoch ein pulverbettbasiertes Schichtbauverfahren verwendet, bei dem ein Partikelmaterial in dünnen Schichten auf eine Plattform aufgebracht wird und ein computergesteuerter Druckkopf anhand eines digitalen Datensatzes selektiv Bereiche mit einem Bindernittel versetzt, um diese zu verkleben. Das überschüssige Partikelmaterial, welches nach Beendigung des Verfahrens nicht verklebt wurde, kann anschliessend vom verklebten Material entfernt und z. B. wiederverwendet werden.

Als Partikelmaterial können grundsätzlich alle aus dem Stand der Technik bekannten Materialen für den 3D-Druck verwendet werden, wie z.B. Sand, Gips, Thermoplasten, Metall-, Mineral-, Silikat- oder Keramikpulver. Der im Rahmen dieser Anmeldung verwendete Begriff "Partikelmaterial" umfasst sowohl körnige Materialen wie auch Fasermaterialien, wie z. B. Cellulosefasern, Holzfasern, Gräserfasern etc. Als Bindemittel wird ein wasserlösliches Bindemittel eingesetzt, wie z. B. mindestens ein Polysaccharid, ein Protein, ein Salz, ein Silikat, ein Tannin, Polyvinylacetat. Polyvinylalkohol, Polyvinylpyrrolidon oder eine Mischung davon.

Vorzugsweise wird die Gussform vor dem Versiegeln der Oberfläche durch das wasserunlösliche Material gereinigt. Ferner kann die Oberfläche der Gussform vor dem Versiegeln auch mechanisch bearbeitet werden, z.B. durch Schleifen.

Als "wasserunlösliches Material" Im Sinne der vorliegenden Anmeldung wird ein Material verstanden, welches keine oder nur eine sehr geringe Löslichkeit, d.h. von unter 1g pro Liter in Wasser aufweist. Um beim Auflösen der Gussform mit heissem Wasser eventuelle Verformungen von Formteilen, welche aus einem aushärtenden Werkstoff mit niedriger Glasübergangstemperatur hergestellt werden, zu vermelden, können insbesondere sehr niedrig schmelzende Wachse oder Fette zur Anwendung kommen.

Als "aushärtenden Werkstoff" im Sinne der vorliegenden Anmeldung wird ein Werkstoff verstanden, der über eine chemische Reaktion von einem fliessfähigen Zustand in einen ausgehärteten Zustand übergeht. Bevorzugt handelt es sich dabei um einen Werkstoff, bei dem eine Polymerisationsreaktion stattfindet, insbesondere durch Polykondensation. Polyaddition oder ionische Polymerisation. Insbesondere bevorzugt umfasst der aushärtende Werkstoff ein hydraulisch abbindendes Material, d.h. ein Material, welches hygroskopische Eigenschaften aufweist und Wasser als Kristallwasser in einer Kristallstruktur einlagert, wobei durch die Bildung einer Kristallstruktur der Werkstoff aushärtet.

Der Werkstoff umfasst bevorzugt zementgebundene Werkstoffe, Phosphatzement, Gips, Calciumsulphat (Anhydrit) sowie Polyurethane, Epoxidharze, Polystyrole, Polyacrylate, Polyamide, Polyester und/oder Polyimide sowie biologisch abbaubare Kunststoffe. Es versteht sich, dass der aushärtbare Werkstoff, mit dem die Gussform befüllt wird, die Ausgangsstoffe des ausgehärteten Werkstoffs beziehungsweise die Monomere der entsprechenden Polymere umfasst. Beispielsweise also ein Isocyanat sowie ein Polyol zur Bildung von Polyurethan. Zum Erstellen eines Abgusses des Formteils ist der Werkstoff fliessfähig, d.h. er weisst eine Viskosität auf, welche genügend klein ist, um das Befüllen der Gussform mit dem Werkstoff zu ermöglichen.

Grundsätzlich sind alle Systeme geeignet, die belm Verfestigen nicht auf die Entfernung eines Lösungsmittels angewiesen sind. Dazu gehören alle Zweikomponenten Kunststoffsysteme. In einer besonders bevorzugten Ausführungsform wird eine Glasfaserarmierung in eine Gussform eingelegt und die Gussform anschliessend mit Zweikomponenten Gusspolyurethan ausgegossen. Für Werkstoffe, die eine grosse Exothermie beim Aushärten zeigen, kann die Gussform zusätzlich von Aussen gekühlt werden, um ein Aufschmelzen des zur Versiegelung der Oberfläche der Gussform verwendeten wasserunlöslichen Materials zu verhindern.

Als "wässrige Lösung" im Sinne der vorliegenden Anmeldung werden Lösungen, die einen Volumenanteil von über 60%, bevorzugt von über 75% an Wasser aufweisen, verstanden. Insbesondere bevorzugt wird als wässrige Lösung reines Wasser, insbesondere destilliertes Wasser verwendet.

Erfindungsgemäss ist die wässrige Lösung zum Auflösen der Gussform temperiert, d.h. sie weist eine höhere Temperatur als die typische Raumtemperatur von 20° C auf, z.B. 80° C. Eine Temperatur wird gewählt, die oberhalb der Schmelztemperatur des verwendeten wasserunlöslichen Materials liegt. Dadurch kann gleichzeitig mit dem Auflösen der Gussform auch das wasserunlösliche Material schnell und zuverlässig vom Abguss des Formteils entfernt werden.

Vorzugsweise erfolgt die Wahl des zur Herstellung der wasserlöslichen Gussform verwendeten Materials sowie des wasserunlöslichen Materials derart, dass diese nach dem erfolgten Auflösen der Gussform aus der wässrigen Lösung einfach abgetrennt und einzeln wiederverwertet werden können. Beispielsweise kann das wasserunlösliche Material nach dem Abkühlen der wässrigen Lösung auskristallisieren und das wasserlösliche Material der Gussform aus der wässrigen Lösung ausgefiltert werden.

Die Gussform wird in einem 3D-Druckverfahren hergestellt. Erfindungsgemäss in einem pulverbettbasierten 3D-Druckverfahren.

Bevorzugt wird die Oberfläche der Gussform durch Eintauchen in ein Bad, durch Aufsprühen und/oder durch Aufpinseln mit dem wasserunlöslichen Material versiegelt. Erfindungsgemäss wird das wasserunlösliche Material vor dem Versiegeln durch Erwärmen oberhalb der Schmelztemperatur verflüssigt. Alternativ, aber nicht als Teil der Erfindung, kann das wasserunlösliche Material auch durch ein flüchtiges, organisches Lösungsmittel gelöst und als organische Lösung auf die Oberfläche die Gussform aufgetragen werden, wobei nach der vollständigen Verflüchtigung des Lösungsmittels eine Schicht des wasserunlöslichen Materials auf der Oberfläche der Gussform zurückbleibt.

Bevorzugt wird die Gussform beim Befüllen mit dem Werkstoff mit Unter- oder Überdruck beaufschlagt und/oder einer Rüttelbewegung oder einer Temperaturerhöhung ausgesetzt. Dadurch lässt sich sicherstellen, dass der in der Gussform vorhandene Negativabdruck des Formteils vollständig mit dem fliessfähigen, aushärtenden Werkstoff gefüllt wird.

Bei der Verwendung eines zementgebundenen Werkstoffs ist es insbesondere möglich, Armierungen mit einzuglessen. Diese Armierungen können als Drahtgeflechte, Glasfasergewebe oder vergleichbares ausgestaltet sein. Der Zementwerkstoff muss für das Befüllen der Gussform Jedoch sehr dünnflüssig eingestellt werden. Hierzu eignen sich die im Stand der Technik bekannten Fliessverbesserungsadditive sowie sphärische Zuschlagsstoffe bzw. Sondersande. Durch das zusätzliche Einbringen von Hohlglaskugeln können mit dem erfindungsgemässen Verfahren Formteile aus extrem leichten Zementwerkstoffen erzeugt werden.

Eine Armierung kann, muss aber nicht erfolgen. Ebenso können andere Füllstoffe, insbesondere kurze Fasern oder Nanopartikel dem Werkstoff zugegeben werden, um das Formteil zu verstärken.

Insbesondere bevorzugt werden mit dem erfindungsgemässen Verfahren elastische Formteile hergestellt. Dazu eignen sich besonders Zweikomponenten Silikone aufgrund Ihrer vergleichsweise geringen Viskosität.

Das Auflösen der Gussform erfolgt vorzugsweise durch Eintauchen der Gussform in ein Bad mit der wässrigen Lösung. Bevorzugt wird das Auflösen durch Bewegungen der Gussform Innerhalb des Bades oder durch eine Temperaturerhöhung und/oder durch Beaufschlagen mit Ultraschall beschleunigt.

Die Gussform kann im Bad aktiv bewegt werden, z. B. durch hin- und herschwenken von Hand. Alternativ kann das Bad auf eine Wippe gelegt oder die wässrige Lösung mit einer Mischvorrichtung in Bewegung versetzt werden. Die Temperaturerhöhung erfolgt vorzugsweise über eine externe Wärmequelle, auf die das Bad gestellt wird oder über eine Tauchheizung. Das Beaufschlagen mit Ultraschall erfolgt vorzugsweise in einem handelsüblichen Ultraschallbad.

Besonders bevorzugt erfolgt das Auflösen der Gussform In einem Autoklaven. Durch den im Autoklaven erzeugten Überdruck und der grossen Hitze des Wasserdampfs lässt sich eine erfindungsgemässe Gussform sowie das zur Versiegelung verwendete wasserunlösliche Material schnell und ohne Rückstände vom Abguss des Formteils entfernen.

Insbesondere bevorzugt wird als wasserunlösliches Material ein Gusspolyamid verwendet. Als "Gusspolyamid" wird ein thermoplastischer Kunststoff verstanden, welcher durch ionische Polymerisation aus Caprolactam erhalten wird.

Eine weitere Aufgabe der vorliegenden Erfindung Ist die Schaffung eines Materialsystems zur Herstellung von wasserlöslichen Gussformen, welche im erfindungsgemässen Verfahren verwendet werden. Das Materialsystem umfasst mindestens ein wasserlösliches Material zum Aufbau der Gussform in einem Schichtbauverfahren sowie mindestens ein wasserunlösliches Material zum Versiegeln der Oberfläche der Gussform. Das wasserlösliche Material umfasst mindestens ein Partikelmaterial sowie wenigstens ein wasserlösliches Bindemittel.

Mit diesem Materialsystem lasst sich Im Schichtbauverfahren eine Gussform herstellen, welche nach dem Erstellen eines Abgusses des herzustellenden Formtells einfach in einer wässrigen Lösung aufgelöst werden kann, wobei dadurch sowohl das Entformen als auch die Bildung von komplexen Formen, wie Hinterschnitten, oder eines Kernes vereinfacht werden.

Bevorzugt umfasst das wenigstens eine Bindemittel eine anorganische Verbindung. Insbesondere bevorzugt umfasst das wenigstens eine Bindemittel Natrium- und/oder Kaliumsilikate. Diese auch unter dem Namen "Wasserglas" bekannten Silikate sind sehr gut wasserlöslich und toxisch völlig unbedenklich. Weiter bevorzugt kann das wenigstens eine Bindemitel Schichtsilikate umfassen.

Vorzugsweise umfasst das wenigstens eine Bindemittel mindestens ein Polysaccharid, insbesondere Sucrose oder Stärke, mindestens ein Protein, mindestens ein Silikat, mindestens ein Salz und/oder mindestens ein wasserlösliches Polymer, insbesondere Polyvinylalkohol, Polyvinylacetat oder Polyvinylpyrrolidon, oder eine Mischung davon. Polysaccharide können Insbesondere durch Rekristallisation, z. B. bei Erkalten einer zuvor erhitzten übersättigten Lösung als umweltverträgliche und ungiftige Bindemittel verwendet werden.

Erfindungsgemäss umfasst das wasserunlösliche Material Wachs, mindestens eine Fettsäure, mindestens ein wasserunlösliches Polymer, Stearylalkohol und/oder Cetylalkohol oder eine Mischung davon.

Geeignete Wachse sind zum Beispiel tierische Wachse wie Bienenwachs oder auch pflanzliche Wachse wie das Carnaubawachs. Aufgrund des Preises wird Jedoch bevorzugt ein synthetisches Wachs wie Paraffin verwendet.

Ein weiterer Aspekt betrifft eine Gussform, welche aus dem erfindungsgemässen Materialsystem hergestellt wird. Eine derartige Gussform lässt sich einfach und schnell durch ein Schichtaufbauverfahren herstellen, wobei durch eine Versiegelung der Oberfläche der Gussform mit dem wasserunlöslichen Material ein präziser und formgenauer Abguss eines Formteils hergestellt werden kann. Die Gussform kann anschliessen einfach und schnell durch Anwendung einer wässrigen Lösung entfernt werden.

Ein weiterer Aspekt betrifft ein Formteil, welches durch ein erfindungsgemässes Verfahren hergestellt wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Gussform mit einem Negativabdruck eines Formteils sowie einem Kern;
- Fig. 2: die Schichtstufung und Porosität des Formtells:
- Fig. 3a, 3b: zwei Arten der Versiegelung;
- Fig. 4: ein Tauchbad mit einer Gussform;
- Flg. 5: das Befüllen der Gussform mit einem aushärtenden Werkstoff;
- Fig. 6: eine erste Ausführungsform eines Bades zum Auflösen der Gussform;
- Fig. 7: eine zweite Ausführungsform eines Bades zum Auflösen der Gussform;
- Fig. 8: eine dritte Ausführungsform eines Bades zum Auflösen der Gussform: und
- Fig. 9: eine Sprühkammer zum Auflösen der Gussform.

Grundsätzlich sind in den Figuren gleiche Teile mit gleichen Bezugszeichen versehen.

### Wege zur Ausführung der Erfindung

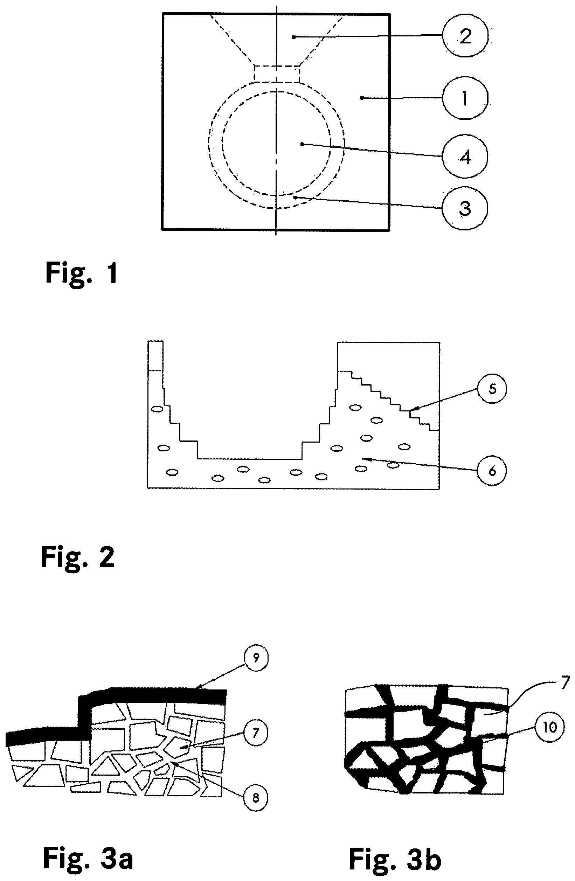

Die Figur 1 zeigt eine In einer Ausführungsform des erfindungsgemässen Verfahrens verwendete wasserlösliche Gussform 1. Die Gussform 1 weist einen Negativabdruck 3 der Aussenform des herzustellenden Formteils auf. Zudem ist beim gezeigten Ausführungsbeispiel ein innerhalb des Negativabdrucks 3 angeordneter Kern 4 gezeigt. Zum Befüllen der Gussform 1 mit einem aushärtenden Werkstoff weist die Gussform 1 eine Einfüllöffnung 2 auf. Zur Herstellung der Formen 1 und Kerne 4 kommen additive Schichtbauverfahren zum Einsatz. Aufgrund der außerordentlichen Freiheit bei der Wahl des Partikelmaterials kommt besonders bevorzugt ein 3D-Druckverfahren zum Einsatz.

Die Figur 2 zeigt anhand eines Schnittbildes exemplarisch den Schichtaufbau 5 sowie die daraus resultierende Porosität 6 einer mittels eines pulverbettbasierten Schichtbauverfahrens hergestellten Gussform 1. Beim verwendeten 3D-Druckverfahren trägt ein Beschichter Partikelmaterial oder eine Mischung aus Partikelmaterial und Bindemittel schichtweise auf eine Bauplattform auf, wobei jede Schicht 5 exakt nivelliert wird. Im Anschluss wird über einen Tintenstrahldruckkopf ein Bindemittel oder eine das Bindemittel aktivierende Flüssigkeit aufgetragen, Dieser Auftrag entspricht einem Schnittbild der herzustellenden Form. Die aktuelle Schicht 5 wird abgesenkt und durch erneutes Beschichten beginnt der Zyklus von vorne. Der Zyklus wird so lange wiederholt, bis die Gesamtheit der Schnittbilder die gewünschte Gussform1 ergeben. Nach einer gewissen Ruhezeit kann die Gussform1 entnommen und vom ungebundenen Partikelmaterial gereinigt werden. Zur Verfestigung kann anschließend noch ein Trocknungsschritt oder eine Wärmebehandlung durchgeführt werden. Diese muss so eingestellt werden, dass die Wasserlöslichkeit der Gussform 1 nicht verloren geht.

Auf den Figuren 3a und 3b sind zwei Arten der Versiegelung der Oberfläche einer Gussform 1 mit einem wasserunlöslichen Material gezeigt. Die Figur 3a zeigt eine oberflächliche Versiegelung, wobei das wasserunlösliche Material eine Versiegelungsschicht 9 auf der Oberfläche der Gussform 1 gebildet hat. Unterhalb der Versiegelungsfläche 9 sind zwischen den einzelnen Partikeln 7 vorhandene Poren 8 erkennbar, welche ein offenporiges Netzwerk bilden. Die Versiegelungsfläche 9 verhindert, dass beim Befüllen der Gussform 1 mit dem aushärtenden Material dieses in die Poren 8 eindringt, wodurch die Oberflächeneigenschaften des mit dem aushärtenden Werkstoffs hergestellten Abgusses verschlechtert würden. Die Figur 3b zeigt eine Versiegelung, bei der das wasserunlösliche Material 10 In das Netzwerk der Poren 8 eindringt und dieses somit verschliesst. Letzter Versiegelungsart erfolgt insbesondere bei der Verwendung eines wasserunlöslichen Materials, welches eine niedrige Viskosität aufweist. Je nach Viskosität des wasserunlöslichen Materials ergeben sich auch Mischformen der beiden Versiegelungsarten der Figuren 3a und 3b.

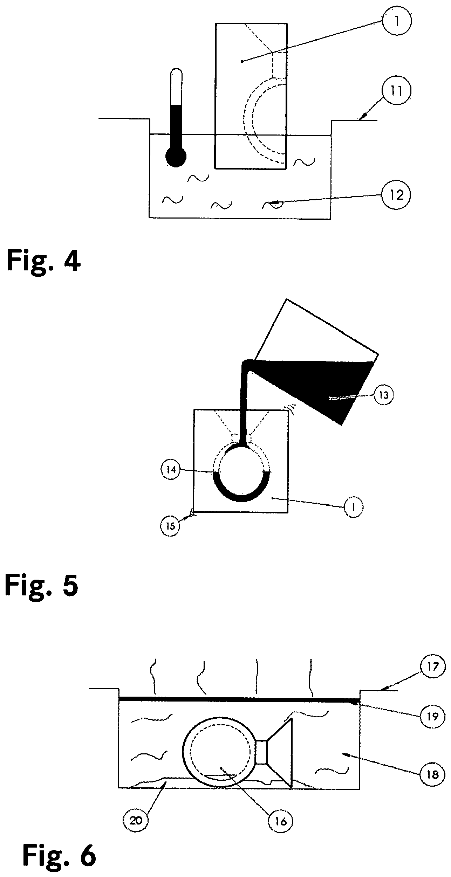

Auf der Figur 4 Ist schematisch ein Tauchbad 11 abgebildet, welches das Einlegen einer Gussform 1 in verflüssigtes wasserunlösliches Material 12 ermöglicht Durch das Einlegen einer Gussform 1 in ein derartiges Tauchbad 11 kann relativ schnell eine ganzflächige Versiegelung der Oberfläche der Gussform 1 erreicht werden.

Der Versiegelungsschritt ist notwendig, um eine Wechselwirkung der Gussform mit dem aushärtenden Werkstoff zu verhindern und eine hohe Oberflächengüte zu gewährleisten. Beispielsweise darf während des Befüllens von Beton kein Wasser in die Gussform eindringen, da durch den Wasserverlust die Fließfähigkeit des Betons verloren ginge und dadurch nur unbefriedigende Formfüllung erreicht würde. Zudem können durch die Versiegelung bessere Oberflächengüten erzielt werden. Eine chemische Reaktion zwischen dem aushärtenden Werkstoff und dem Bindemittel oder Partikelmaterial der Gussform kann ebenso unterbunden werden.

Die Figur 5 zeigt den Schritt des Befüllens der Gussform 1 mit dem aushärtenden Werkstoff 13. Der aushärtende Werkstoff 13 wird in fliessfähiger Form über die Einfüflöffnung 3 der Gussform 1 in den Negativabdruck 4 eingefüllt. Über eine geeignete Vorrichtung, wie z. B. einem Rütteltisch, kann die Gussform 1 mit einer Vibration 15 beaufschlagt werden.

Das Befüllen der Gussform kann als reiner Schwerkraftguss ausgeführt werden. Dazu müssen keine besonderen Vorkehrungen getroffen werden. Der aushärtbare Werkstoff sollte dünnflüssig sein und die Gestaltung der Gussform sollte ein Entweichen von verdrängter Luft durch den steigenden Pegel des Werkstoffs ermöglichen,

Auf der Figur 6 Ist ein Formteil 16 nach dem Aushärten des Werkstoffs 13 in einem Bad 17 aus einer wässrigen Lösung 18 abgebildet. Um das Auflösen der Gussform 1 zu beschleunigen, ist beim abgebildeten Bad 17 die wässrige Lösung 18 erwärmt. Das Partikelmaterial 20 der aufgelösten Gussform sammelt sich bei der gezeigten Ausführungsform am Grund des Bades 17 an, während das geschmolzene, wasserunlösliche Material eine Schicht 19 auf der Oberfläche der wässrigen Lösung 18 bildet. Diese Schicht 19 kann in der Folge einfach von der Oberfläche der wässrigen Lösung 18 abgeschöpft und wiederverwendet werden, während das Partikelmaterial 20 aus der wässrigen Lösung 18 gefiltert werden kann.

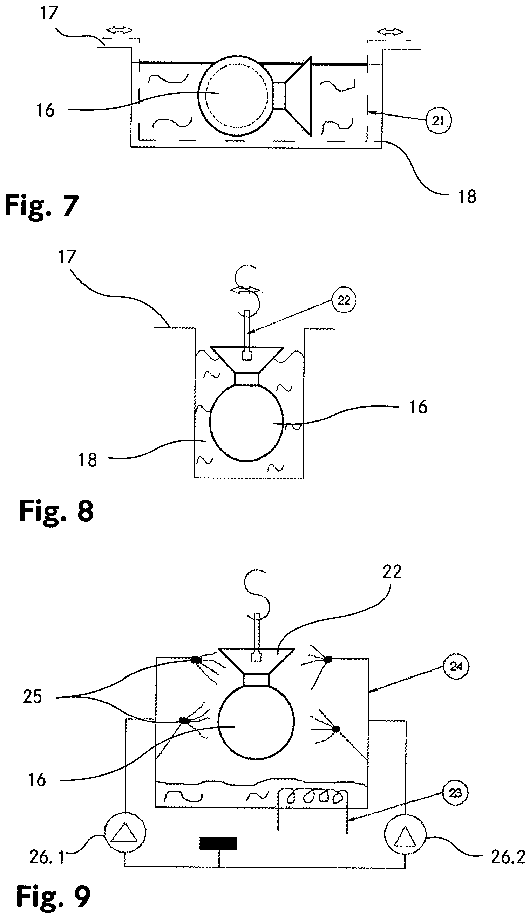

Die Figuren 7 und 8 zeigen zwei weitere bevorzugte Ausführungsformen eines Bades 17 mit einer wässrigen Lösung 18. Bei der auf der Figur 7 gezeigten Ausführungsform wird das Formteil 16 mithilfe eines Gitterrostes 21 in der wässrigen Lösung 18 zusätzlich in Bewegung versetzt. Bei der Ausführungsform der Figur 8 wird das Formteil 16 mithilfe eines Griffes 22, welcher am Formteil 16 angreift oder in diesen eingegossen wird In der wässrigen Lösung geschwenkt.

Auf der Figur 9 ist eine weitere Ausführungsform für das Auflösen der Gussform 1 gezeigt. Bei dieser Ausführungsform wird das Formteil 16 innerhalb einer Sprühkammer 24 gehalten, wobei über mehrere Sprühköpfe 25 heisses Wasser auf die Gussform 1 bezlehungsweise auf das Formteil 16 gesprüht wird. Das sich am Grund der Sprühkammer 24 ansammelnde Wasser kann in der Folge durch geeignete Filter vom aufgelösten Material der Gussform sowie vom wasserunlöslichen Material getrennt, über eine Heizspirale 23 erhitzt und erneut mithilfe von Pumpen 26 (26.1, 26.2) über die Sprühköpfe 25 auf die Gussform beziehungsweise auf das Formteil 16 gesprüht werden.

## Patentansprüche

1. Verfahren zur Herstellung von Formteilen (16) mittels 3D-Druckverfahren zur Herstellung von Gussformen, umfassend die Schritte:
a) Herstellung einer wasserlöslichen Gussform (6), die Poren (8) aufweist, mit einem pulverbettbasierten Schichtbauverfahren;
b) Versiegeln der Oberfläche der Gussform (6) mit einem Material (9; 10), wobei das Material (9; 10) zum Versiegeln der Oberfläche der Gussform (6) wasserunlöslich Ist;
c) Erstellen eines Abgusses des Formteils (16) durch Befüllen der Gussform (6) mit einem fliessfähigen, aushärtbaren Werkstoff (13);
d) Auflösen der Gussform (6) mit einer wässrigen Lösung (18) nachdem der Abguss verfestigt ist, **dadurch gekennzeichnet, dass** die wässerige Lösung temperiert ist und eine höhere Temperatur als die Raumtemperatur von 20 °C aufweist und wobei das zum Versiegeln verwendete, wasserunlösliche Material gleichzeitig vom Abguss abgewaschen werden kann, wobei die Temperatur der Lösung (18) oberhalb der Schmelztemperatur der verwendeten wasserunlöslichen Materials liegt.

2. Verfahren nach Anspruch 1, **dadurch gekennzeichnet, dass** der Werkstoff ein hydraulisch abbindender Werkstoff ist, vorzugsweise
dass die Oberfläche der Gussform (6) durch Eintauchen in ein Bad (11), durch Aufsprühen und/oder durch Aufpinseln mit dem Material (9; 10) versiegelt wird.

3. Verfahren nach einem der vorgehenden Ansprüche, **dadurch gekennzeichnet,**
**dass** die Gussform (6) beim Befüllen mit dem fliessfähigen, aushärtenden Werkstoff (13) mit Unter- oder Überdruck beaufschlagt wird und/oder einer Rüttelbewegung oder einer Temperaturerhöhung ausgesetzt wird.

4. Verfahren nach einem der vorgehenden Ansprüche, **dadurch gekennzeichnet,**
**dass** das Auflösen der Gussform (6) durch Eintauchen in ein Bad (17) mit der wässrigen Lösung (18) erfolgt, wobei das Auflösen bevorzugt durch Bewegungen der Gussform (6) innerhalb des Bades (17) oder durch eine Temperaturerhöhung und/oder durch Beaufschlagen mit Ultraschall beschleunigt wird.

5. Verfahren nach einem der Ansprüche 1 bis 4, **dadurch gekennzeichnet, dass** das Auflösen der Gussform (6) in einem Autoklaven erfolgt.

6. Verfahren nach einem der Ansprüche 1 bis 5, **dadurch gekennzeichnet, dass** die Gussform (6) mit einem Material (9; 10) versiegelt wird, das für die Verwendung von Gusspolyamid als aushärtbarem Werkstoff (13) besondere thermische Resistenz aufweist.

7. Verwendung eines Materialsystems zur Herstellung von wasserlöslichen Gussformen (16) in einem Verfahren gemäss einem der Ansprüche 1 bis 6, umfassend:
a) mindestens ein wasserlösliches Material zum Aufbau einer Gussform (6) in einem Schichtbauverfahren, welches mindestens ein Partikelmaterial (7) sowie wenigstens ein wasserlösliches Bindemittel umfasst; und
b) mindestens ein Material (9; 10) zum Versiegeln der Oberfläche der Gussform (6), wobei das Material (9, 10) zum Versiegeln der Gussform (6) Wachs, mindestens eine Fettsäure, mindestens ein wasserunlösliches Polymer, Stearylalkohol und/oder Cetylalkohol oder eine Mischung davon umfasst.

8. Verwendung eines Materialsystem nach Anspruch 7, wobei das wenigstens eine wasserlösliche Bindemittel mindestens eine anorganischen Verbindung umfasst, vorzugsweise Natrium-, Kalium- und/oder Schichtsilikate, vorzugsweise
dass das wenigstens eine Bindemittel mindestens ein Polysaccharid, insbesondere Sucrose oder Stärke, mindestens ein Salz und/oder mindestens ein wasserlösliches Polymer, insbesondere Proteine, Polyvinylalkohol, Polyvinylacetat oder Polyvinylpyrrolidon, oder eine Mischung davon umfasst.

## Claims

1. A method of manufacturing moulded parts (16) by means of a 3D printing method for the production of casting moulds, comprising the steps of:
a) producing a water-soluble casting mould (6), which has pores (8), by a powder-bed based layer construction method;
b) sealing the surface of the casting mould (6) with a material (9; 10), the material (9; 10) for sealing the surface of the casting mould (6) being water-insoluble;
c) making a cast blank of the moulded part (16) by filling the casting mould (6) with a flowable, curable material (13);
d) dissolving the casting mould (6) with an aqueous solution (18) after the cast blank has solidified,
**characterised in that** the aqueous solution is temperature-controlled and has a higher temperature than the room temperature of 20°C and the water-insoluble material used for sealing can be simultaneously washed off the cast blank, the temperature of the solution (18) being above the melting temperature of the water-insoluble material used.

2. The method according to claim 1, **characterised in that** the material is a hydraulically setting material, preferably
that the surface of the casting mould (6) is sealed by immersion in a bath (11), by spraying and/or by brushing the material (9; 10) onto the surface.

3. The method according to any one of the preceding claims, **characterised in that**, while being filled with the flowable, curing material (13), the casting mould (6) is subjected to negative or positive pressure and/or to a shaking movement or a temperature increase.

4. The method according to any one of the preceding claims, **characterised in that** the dissolution of the casting mould (6) takes place by immersion in a bath (17) containing the aqueous solution (18), the dissolution preferably being accelerated by movements of the casting mould (6) within the bath (17) or by a temperature increase and/or by exposure to ultrasound.

5. The method according to any one of claims 1 to 4, **characterised in that** the dissolution of the casting mould (6) takes place in an autoclave.

6. The method according to any one of claims 1 to 5, **characterised in that** the casting mould (6) is sealed with a material (9; 10) which has special thermal resistance for the use of cast polyamide as the curable material (13).

7. Use of a material system for the production of water-soluble casting moulds (16) in a method according to any one of claims 1 to 6, comprising:
a) at least one water-soluble material for constructing a casting mould (6) in a layer construction method, which comprises at least one particulate material (7) and at least one water-soluble binder, and
b) at least one material (9; 10) for sealing the surface of the casting mould (6), the material (9; 10) for sealing the casting mould (6) comprising wax, at least one fatty acid, at least one water-insoluble polymer, stearyl alcohol and/or cetyl alcohol or a mixture thereof.

8. Use of a material system according to claim 7, wherein the at least one water-soluble binder comprises at least one inorganic compound, preferably sodium silicates, potassium silicates and/or layered silicates, preferably
wherein the at least one binder comprises at least one polysaccharide, in particular sucrose or starch, at least one salt and/or at least one water-soluble polymer, in particular proteins, polyvinyl alcohol, polyvinyl acetate or polyvinyl pyrrolidone, or a mixture thereof.

## Revendications

1. Procédé de fabrication de pièces moulées (16) au moyen d'un procédé d'impression 3D pour la production de moules, comprenant les étapes suivantes:
a) production d'un moule (6) hydrosoluble ayant des pores (8), en utilisant une méthode de construction couche par couche sur lit de poudre ;
b) scellement de la surface du moule (6) avec un matériau (9 ; 10), ledit matériau (9 ; 10) pour sceller la surface du moule (6) étant insoluble dans l'eau ;
c) réalisation d'une pièce coulée brute de la pièce moulée (16) en remplissant le moule (6) avec un matériau fluide et durcissable (13) ;
d) dissolution du moule de coulée (6) avec une solution aqueuse (18) après solidification de la pièce coulée brute,
**caractérisé en ce que** la solution aqueuse est tempérée et a une température supérieure à la température ambiante de 20°C, le matériau insoluble dans l'eau utilisé pour le scellement pouvant être simultanément lavé de la pièce coulée brute, la température de la solution (18) étant supérieure à la température de fusion du matériau insoluble dans l'eau utilisé.

2. Procédé selon la revendication 1, **caractérisé en ce que** le matériau est un matériau à prise hydraulique, de préférence
**en ce que** la surface du moule de coulée (6) est scellée par immersion dans un bain (11), par pulvérisation et/ou par brossage avec le matériau (9 ; 10).

3. Procédé selon l'une quelconque des revendications précédentes, **caractérisé en ce que** le moule (6) est soumis à une pression négative ou positive et/ou à un secouage ou à une augmentation de la température lors du remplissage avec le matériau fluide et durcissant (13).

4. Procédé selon l'une quelconque des revendications précédentes, **caractérisé en ce que** la dissolution du moule (6) est effectuée par immersion dans un bain (17) contenant la solution aqueuse (18), la dissolution étant accélérée de préférence par des mouvements du moule (6) dans le bain (17) ou par une augmentation de la température et/ou par exposition aux ultrasons.

5. Procédé selon l'une quelconque des revendications 1 à 4, **caractérisé en ce que** la dissolution du moule (6) est effectuée dans un autoclave.

6. Procédé selon l'une quelconque des revendications 1 à 5, **caractérisé en ce que** le moule (6) est scellé avec un matériau (9 ; 10) qui a une résistance thermique spéciale pour l'utilisation de polyamide coulé comme matériau durcissable (13).

7. Utilisation d'un système de matériaux pour la production de moules hydrosolubles (16) dans un procédé selon l'une quelconque des revendications 1 à 6, comprenant:
a) au moins un matériau hydrosoluble pour la construction d'un moule (6) dans un procédé de construction couche par couche, qui comprend au moins un matériau particulaire (7) et au moins un liant hydrosoluble ; et
b) au moins un matériau (9 ; 10) pour sceller la surface du moule (6), le matériau (9 ; 10) pour sceller le moule (6) comprenant de la cire, au moins un acide gras, au moins un polymère insoluble dans l'eau, de l'alcool stéarylique et/ou de l'alcool cétylique ou un mélange de ceux-ci.

8. Utilisation d'un système de matériaux selon la revendication 7, dans lequel ledit au moins un liant hydrosoluble comprend au moins un composé inorganique, de préférence des silicates de sodium, des silicates de potassium et/ou des silicates lamellaires, et de préférence
ledit au moins un liant comprend au moins un polysaccharide, notamment du saccharose ou de l'amidon, au moins un sel et/ou au moins un polymère hydrosoluble, notamment des protéines, de l'alcool polyvinylique, de l'acétate de polyvinyle ou de la polyvinylpyrrolidone, ou un mélange de ceux-ci.
